# EUROPEAN PATENT SPECIFICATION

(11) **EP 4 219 239 B1**
(45) Date of publication and mention of the grant of the patent: **22.07.2026**
(21) Application number: 23153826.5
(22) Date of filing: 27.01.2023
(51) Int. Cl.: B60R 7/10, B60R 13/02, A47F 5/08

(54) **INJECTED POLYMERIC HANGER FOR A VEHICLE AND ASSEMBLY METHOD**
INJIZIERTER POLYMERER AUFHÄNGER FÜR EIN FAHRZEUG UND MONTAGEVERFAHREN
DISPOSITIF DE SUSPENSION POLYMÈRE INJECTÉ POUR UN VÉHICULE ET PROCÉDÉ D'ASSEMBLAGE

(30) Priority: 27.01.2022 PT 2022117764
(43) Date of publication of application: 02.08.2023
(73) Proprietor: Simoldes Plásticos, SA, Oliveira de Azeméis, 3721-902 Santiago de Riba-UL (PT)
(72) Inventor: SILVA MENDES, PEDRO MANUEL, 3721-902 OLIVEIRA DE AZEMEIS (PT); COSTA PINHEIRO, ELISABETE DANIELA, 3721-902 OLIVEIRA DE AZEMEIS (PT)
(74) Representative: Patentree

(56) References cited:
- CN-A- 110 667 447
- CZ-A3- 2 020 244
- DE-A1- 10 161 278
- US-A- 4 506 856
- US-A1- 2008 169 667
- US-A1- 2020 288 879

## Description

### TECHNICAL FIELD

The present description relates to an injected polymeric part for a vehicle comprising an embedded injected polymeric hanger, preferably wherein the part is a pillar of a vehicle, more preferably of an automobile vehicle.

### BACKGROUND

WO2016056513A1 discloses a hook-shaped device for holding a suitcase arranged on the interior wall surface of an automobile. However, in order for it to remain fixed, a second element needs to be arranged on the base thereof during its assembly. Therefore, this solution not only requires greater consumption of parts/materials but also increases the assembly time thereof.

EP0906203A1 discloses an embedding hook for an automobile that is supported on a surrounding wall structure with an opening defined by a peripheral rim. This hook is attached to the structure through a screw, thus taking more time to place it on the automobile production line. Additionally, these types of connections - the hooks - need a structural reinforcement to ensure that the attachment point does not become loose after placing loads on the hook.

US4506856A discloses a perforated panel hook construction having a hinged, fold-over locking flap extending downwardly from a free end thereof. The flap is provided with a peg adapted to be inserted in a hole in a perforated panel in interfering engagement with a mounting pin for the hook to firmly secure and lock the hook in place on the perforated panel.

These facts are described in order to illustrate the technical problem solved by the embodiments of the present document.

### GENERAL DESCRIPTION

The invention is defined by an injected polymeric part for a vehicle comprising an embedded injected polymeric hanger as defined in claim 1.

The present disclosure relates to an injected polymeric part for a vehicle comprising an embedded injected polymeric hanger, i.e. an injection moulded polymeric hanger, preferably the part is a pillar of a vehicle, more preferably of an automobile.

It is an objective of the present embodiments to provide a support solution for the interior of an automobile; namely an embeddable injected polymeric hanger.

The present embodiments are useful for placing supports inside a vehicle, namely a car, train, bus, boat or plane.

The solution presented in this description is based in particular on the fact that it is a single injected polymeric piece.

The present disclosure describes an injected polymeric part for a vehicle comprising an embedded injected polymeric hanger for supporting an object, wherein said hanger fits into a polymeric part of a vehicle, wherein said hanger comprises: a rear surface comprising at least two rear claw-shaped protrusions for fixing the injected polymeric hanger to the polymeric part of a vehicle, preferably a vehicle pillar, with corresponding openings; and a front surface comprising a front protrusion for supporting the object; wherein the rear protrusions comprise at least one upper rear protrusion and at least one lower rear protrusion arranged parallel to each other; wherein the rear protrusions comprise on the elongated part of the claw a top face and a bottom face; wherein the top face of the upper rear protrusion comprises an indentation for receiving a chamfered surface of a tab of the polymeric part of a vehicle.

Surprisingly, the hanger of the present disclosure allows a quick and easy fixing, lesser resource consumption, withstands greater loads and does not require reinforcement in the structure where it is embedded, namely external attachment elements such as screws, nails, rivets; and has greater durability, avoiding gaps that appear in the life cycle of the product, so maintenance and/or the appearance of noise inside the vehicle are reduced.

In an embodiment, the hanger of the present disclosure may comprise at least 3 rear protrusions or at least 4 rear protrusions.

In an embodiment, the hanger of the present disclosure may comprise a pair of upper rear protrusions and a pair of lower rear protrusions arranged parallel to each other.

In an embodiment, the hanger of the present disclosure may comprise a pair of upper rear protrusions and one lower rear protrusion.

In an embodiment, the hanger of the present disclosure may comprise an upper rear protrusion and a pair of lower rear protrusions.

In an embodiment, each rear protrusion comprises a top face parallel with respect to the bottom face.

In an embodiment, each rear protrusion comprises a top face or a bottom face horizontally arranged.

In an embodiment, each rear protrusion comprises a top face with a negative slope with respect to the bottom face.

In an embodiment, the rear protrusions may project vertically, relative to the top, towards the bottom.

In an embodiment, the hanger material is plastic, preferably selected from the following list: polypropylene, acrylonitrile butadiene styrene, or combinations thereof; preferably a mixture of polypropylene with 5% (w/w) talc; or acrylonitrile butadiene styrene.

In an embodiment, the hanger material is a thermoplastic, preferably selected from the following list: polypropylene, acrylonitrile butadiene styrene, or combinations thereof; wherein the material further comprises fillers, dyes, additives or other materials/components.

In an embodiment, the hanger of the present disclosure supports an article of up to 10 kg of weight, preferably between 3-8 kg, more preferably 3-5 kg.

In an embodiment, the hanger of the present disclosure supports an article weighing a maximum of 2.5 kg.

The injected polymeric part of the invention comprises at least one upper opening and one lower opening configured to receive the claw-shaped rear protrusions of the hanger; wherein the upper opening comprises a flexible anti-disassembly tab, and wherein the flexible tab has a chamfered profile on the front face corresponding to the top face indentation of the upper rear protrusion.

Another aspect of the present disclosure refers to the method of assembling the injected polymeric hanger described in the present disclosure in an embedding polymeric part, preferably a pillar of a vehicle, preferably an automobile, which comprises the steps of: aligning the rear protrusions of the hanger with the openings of the embedding polymeric part that is in the vehicle, preferably in the automobile; inserting the lower rear protrusion; applying a force so that the upper rear protrusion is press fitted into the opening of the embedding part.

### BRIEF DESCRIPTION OF THE FIGURES

For an easier understanding, figures are herein attached, which represent preferred embodiments which are not intended to limit the object of the present description.
**Figure 1****:** Schematic representation of an embodiment of the fitting in the automobile pillar for receiving a polymeric hanger with four protrusions.
**Figure 2****:** Schematic representation of an embodiment of a polymeric hanger with four protrusions.
**Figure 3A-3C****:** Schematic representation of an embodiment of the assembly of the polymeric hanger on an automobile pillar.
**Figure 4****:** Schematic representation of an embodiment of the polymeric hanger with two upper rear protrusions and one lower rear protrusion.
**Figure 5****:** Schematic representation of an embodiment of the polymeric hanger with an upper rear protrusion and two lower rear protrusions.
**Figure 6****:** Schematic representation of an embodiment of the polymeric hanger with an upper rear protrusion and a lower rear protrusion.

### DETAILED DESCRIPTION

The present disclosure relates to an injected polymeric part for a vehicle comprising an embedded injected polymeric hanger, i.e. an injection moulded polymeric hanger, preferably an automobile pillar.

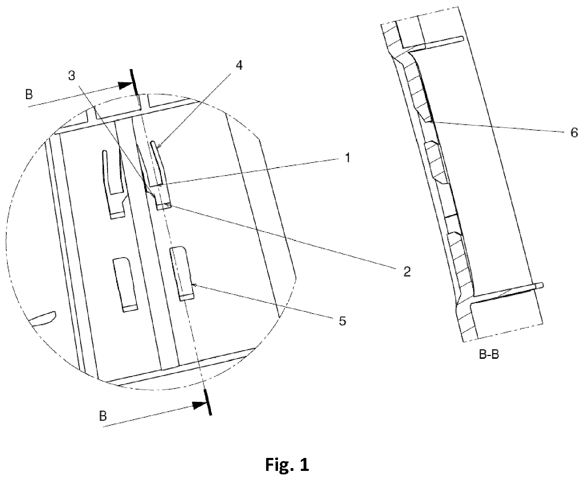

In an embodiment, **Figure 1** shows a schematic representation of an embodiment of the fitting in the pillar of an automobile for receiving a polymeric hanger with four rear protrusions, wherein 1 represents a retention tab of the rear protrusion, 2 represents an inlet chamfer of the upper slot, 3 represents a side positioner of the upper rear protrusion, 4 represents a flexibility slot of the retention tab and 5 represents a side positioner of the lower rear protrusion. On the right, it is possible to observe a B-B section wherein 6 represents a surface responsible for locking the rear protrusion.

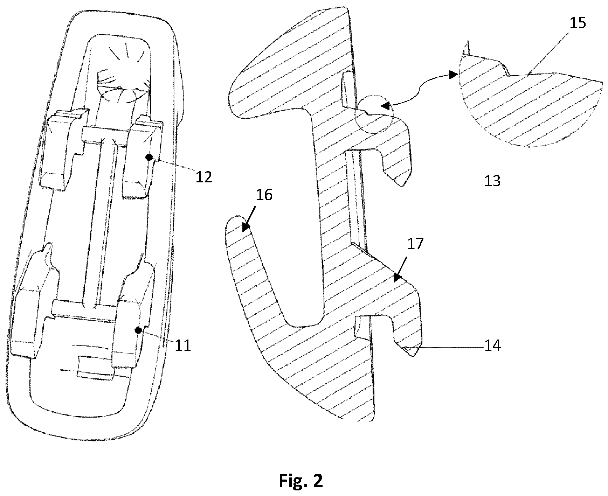

In an embodiment, **Figure 2** shows a schematic representation of an embodiment of a polymeric hanger with four rear protrusions, wherein 11 represents a lower rear protrusion, 12 represents an upper rear protrusion, 13 represents an inlet chamfer of the upper rear protrusion , 14 represents an inlet chamfer of the lower rear protrusion, 15 represents an indentation in the top face of the upper rear protrusion, 16 represents a protrusion configured for supporting an object and 17 represents the arm of a rear protrusion.

In an embodiment, the indentation (25) is configured to hamper the rear protrusion from exiting.

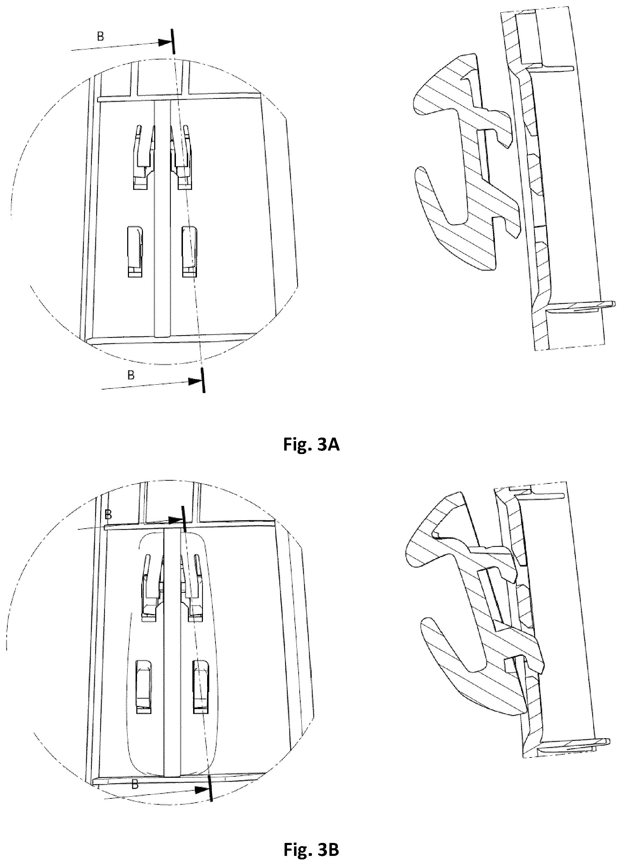

In an embodiment, **Figure 3A** shows a schematic representation of the alignment step between the rear protrusions and the openings in an automobile pillar. In an embodiment, **Figure 3B** shows a schematic representation of the step of inserting the lower rear protrusions into the openings of an automobile pillar.

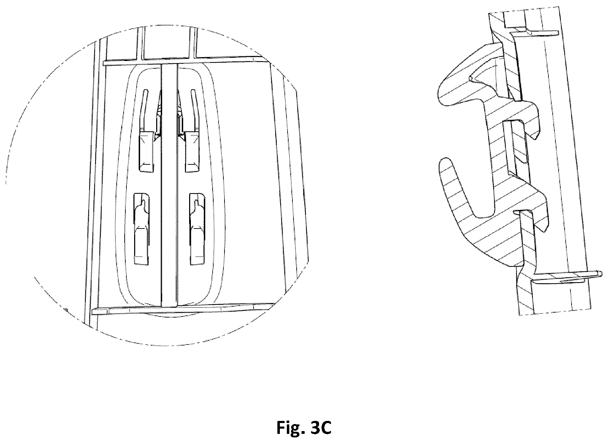

In an embodiment, **Figure 3C** shows a schematic representation of the final appearance of the polymeric hanger fitted to an automobile pillar.

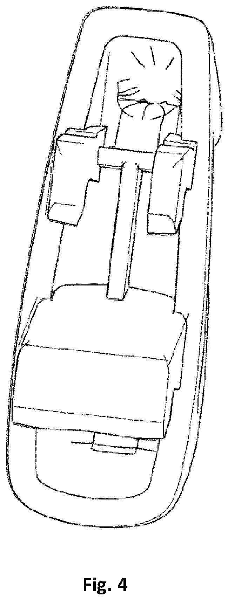

In an embodiment, **Figure 4** shows a schematic representation of a polymeric hanger with two upper rear protrusions and one lower rear protrusion.

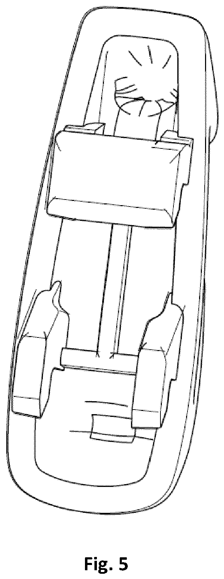

In an embodiment, **Figure 5** shows a schematic representation of a polymeric hanger with an upper rear protrusion and two lower rear protrusions.

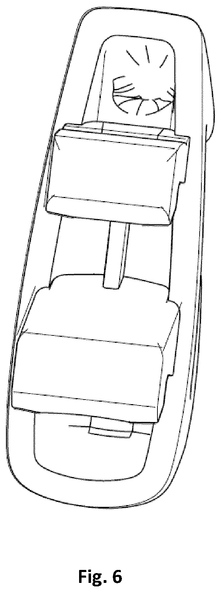

In an embodiment, **Figure 6** shows a schematic representation of a polymeric hanger with an upper rear protrusion and a lower rear protrusion.

The term "comprises" or "comprising" when used herein is intended to indicate the presence of stated features, elements, integers, steps and components, but does not preclude the presence or addition of one or more other features, elements, integers, steps and components, or groups thereof.

The present invention is of course in no way restricted to the embodiments described herein and a person of ordinary skill in the art can foresee many possibilities of modifying it and replacing technical features with equivalents depending on the requirements of each situation as defined in the appended claims.

## Claims

1. Injected polymeric part for a vehicle comprising an embedded injected polymeric hanger, wherein the embedded injected polymeric hanger comprises:
a rear surface comprising at least two claw-shaped rear protrusions (13, 14) for fixing the injected polymeric hanger to the polymeric part of a vehicle, preferably a vehicle pillar, with corresponding openings; and
a front surface comprising a front protrusion for supporting the object (16);
wherein the rear protrusions (13, 14) comprise at least one upper rear protrusion (13) and at least one lower rear protrusion (14), arranged parallel to each other;
wherein the rear protrusions (13, 14) comprise on the elongated part of the claw a top face and a bottom face;
wherein the top face of the upper rear protrusion comprises an indentation (15) for receiving a chamfered surface of a tab of the polymeric part of a vehicle;
wherein the injected polymeric part comprises at least one upper opening (2) and one lower opening configured to receive the claw-shaped rear protrusions (13, 14) of the hanger; wherein the upper opening (2) comprises a flexible anti-disassembly tab (1), and wherein the flexible tab (1) has a chamfered profile on the front face corresponding to the top face indentation (15) of the upper rear protrusion (13).

2. Injected polymeric part according to claim 1, wherein the embedded injected polymeric hanger comprises at least 3 rear protrusions or at least 4 rear protrusions.

3. Injected polymeric part according to the preceding claims, wherein the embedded injected polymeric hanger comprises a pair of upper rear protrusions and a pair of lower rear protrusions arranged parallel to each other.

4. Injected polymeric part according to claims 1-2, wherein the embedded injected polymeric hanger comprises a pair of upper rear protrusions and one lower rear protrusion.

5. Injected polymeric part according to claims 1-2, wherein the embedded injected polymeric hanger comprises an upper rear protrusion and a pair of lower rear protrusions.

6. Injected polymeric part according to any one of the preceding claims, wherein each rear protrusion of the embedded injected polymeric hanger comprises a top face parallel with respect to the bottom face.

7. Injected polymeric part according to any one of the preceding claims, wherein each rear protrusion of the embedded injected polymeric hanger comprises a top face or a bottom face horizontally arranged.

8. Injected polymeric part according to any one of claims 1-5, wherein each rear protrusion of the embedded injected polymeric hanger comprises a top face with a negative slope with respect to the bottom face.

9. Injected polymeric part according to any one of the preceding claims, wherein the rear protrusions of the embedded injected polymeric hanger project vertically, relative to the top, towards the bottom.

10. Injected polymeric part according to any one of the preceding claims, wherein the embedded injected polymeric hanger material is plastic, preferably selected from the following list: polypropylene, acrylonitrile, butadiene, styrene, or combinations thereof; preferably a mixture of polypropylene with 5% (w/w) of talc or of acrylonitrile, butadiene, styrene.

11. Injected polymeric part according to any one of the preceding claims, wherein the embedded injected polymeric hanger supports an article weighing a maximum of 10 kg, preferably between 3-8 kg, more preferably 3-5 kg.

12. Injected polymeric part according to any one of the preceding claims, wherein the embedded injected polymeric hanger supports an article weighing a maximum of 2.5 kg.

13. Method of assembling the injected polymeric hanger in the embedding injected polymeric part for a vehicle described in any one of claims 1-12, preferably in a vehicle pillar, comprising the steps of:
aligning the rear protrusions of the hanger with the openings of the embedding polymeric part of the vehicle;
inserting the lower rear protrusion;
applying a force so that the upper rear protrusion is press fitted into the opening of the embedding polymeric part of the vehicle.

## Patentansprüche

1. Spritzgegossenes Polymerbauteil für ein Fahrzeug, umfassend einen eingebetteten spritzgegossenen Polymerhalter, wobei der eingebettete spritzgegossene Polymerhalter umfasst:
eine hintere Oberfläche, umfassend mindestens zwei rückseitige hakenförmige Vorsprünge (13, 14) zur Befestigung des spritzgegossenen Polymerhalters an dem Polymerbauteil eines Fahrzeugs, bevorzugt an einer Fahrzeugsäule, mit entsprechenden Öffnungen; und
eine vordere Oberfläche, umfassend einen vorderseitigen Vorsprung zum Halten des Gegenstands (16);
wobei die hinteren Vorsprünge (13, 14) mindestens einen oberen rückseitigen Vorsprung (13) und mindestens einen unteren rückseitigen Vorsprung (14) umfassen, die parallel zueinander angeordnet sind;
wobei die rückseitigen Vorsprünge (13, 14) am länglichen Teil des Hakens eine Oberseite und eine Unterseite aufweisen;
wobei die Oberseite des oberen rückseitigen Vorsprungs eine Vertiefung (15) zur Aufnahme einer abgeschrägten Fläche einer Zunge des Polymerbauteils eines Fahrzeugs umfasst;
wobei das spritzgegossene Polymerbauteil mindestens eine obere Öffnung (2) und eine untere Öffnung umfasst, die zur Aufnahme der hakenförmigen rückseitigen Vorsprünge (13, 14) des Halters ausgebildet sind; wobei die obere Öffnung (2) eine flexible Zunge als Demontagesicherung (1) umfasst und wobei die flexible Zunge (1) an ihrer Vorderseite ein abgeschrägtes Profil aufweist, das der Vertiefung (15) an der Oberseite des oberen rückseitigen Vorsprungs (13) entspricht.

2. Spritzgegossenes Polymerbauteil nach Anspruch 1, wobei der eingebettete spritzgegossene Polymerhalter mindestens 3 rückseitige Vorsprünge oder mindestens 4 rückseitige Vorsprünge aufweist.

3. Spritzgegossenes Polymerbauteil nach den vorangehenden Ansprüchen, wobei der eingebettete spritzgegossene Polymerhalter ein Paar obere rückseitige Vorsprünge und ein Paar unterer rückseitige Vorsprünge umfasst, die parallel zueinander angeordnet sind.

4. Spritzgegossenes Polymerbauteil nach einem der Ansprüche 1-2, wobei der eingebettete spritzgegossene Polymerhalter ein Paar obere rückseitige Vorsprünge und einen unteren rückseitigen Vorsprung aufweist.

5. Spritzgegossenes Polymerbauteil nach einem der Ansprüche 1-2, wobei der eingebettete spritzgegossene Polymerhalter einen oberen rückseitigen Vorsprung und ein Paar untere rückseitige Vorsprünge aufweist.

6. Spritzgegossenes Polymerbauteil nach einem der vorangehenden Ansprüche, wobei jeder rückseitige Vorsprung des eingebetteten spritzgegossenen Polymerhalters eine zur Unterseite parallele Oberseite aufweist.

7. Spritzgegossenes Polymerbauteil nach einem der vorangehenden Ansprüche, wobei jeder rückseitige Vorsprung des eingebetteten spritzgegossenen Polymerhalters eine horizontal angeordnete Oberseite oder Unterseite aufweist.

8. Spritzgegossenes Polymerbauteil nach einem der Ansprüche 1-5, wobei jeder rückseitige Vorsprung des eingebetteten spritzgegossenen Polymerhalters eine Oberseite aufweist, die gegenüber der Unterseite eine negative Neigung aufweist.

9. Spritzgegossenes Polymerbauteil nach einem der vorangehenden Ansprüche, wobei die rückseitigen Vorsprünge des eingebetteten spritzgegossenen Polymerhalters relativ zur Oberseite senkrecht nach unten ragen.

10. Spritzgegossenes Polymerbauteil nach einem der vorangehenden Ansprüche, wobei das eingebettete, spritzgegossene Polymermaterial aus Kunststoff besteht, bevorzugt ausgewählt aus der folgenden Liste: Polypropylen, Acrylnitril, Butadien, Styrol oder Kombinationen davon; bevorzugt eine Mischung aus Polypropylen mit 5 % (Gew./Gew.) Talk oder aus Acrylnitril, Butadien, Styrol.

11. Spritzgegossenes Polymerbauteil nach einem der vorangehenden Ansprüche, wobei der eingebettete, spritzgegossene Polymeraufhänger einen Gegenstand mit einem Gewicht von maximal 10 kg, bevorzugt zwischen 3-8 kg, besonders bevorzugt zwischen 3-5 kg, trägt.

12. Spritzgegossenes Polymerbauteil nach einem der vorangehenden Ansprüche, wobei die eingebettete, spritzgegossene Polymeraufhänger einen Gegenstand mit einem Gewicht von maximal 2,5 kg trägt.

13. Verfahren zum Einbau des eingebetteten spritzgegossenen Polymerhalters in das eingebettete spritzgegossene Polymerbauteil eines Fahrzeugs, wie in einem der Ansprüche 1-12 beschrieben, bevorzugt in eine Fahrzeugsäule, umfassend die folgenden Schritte:
Ausrichten der rückseitigen Vorsprünge der Halterung an den Öffnungen des eingebetteten Polymerbauteils des Fahrzeugs;
Einsetzen der rückseitigen unteren Vorsprünge;
Ausüben einer Kraft, sodass der obere rückseitige Vorsprung durch Presspassung in die Öffnung des eingebetteten Polymerbauteils des Fahrzeugs eingepasst wird.

## Revendications

1. Pièce polymère injectée pour un véhicule comprenant un dispositif de suspension polymère injecté incorporé, dans lequel le dispositif de suspension polymère injecté incorporé comprend :
une surface arrière comprenant au moins deux saillies arrières en forme de griffe (13, 14) destinées à fixer le dispositif de suspension polymère injecté à la pièce polymère d'un véhicule, préférablement un montant de véhicule, avec les ouvertures correspondantes ; et
une surface avant comprenant une saillie avant destinée à supporter l'objet (16) ;
dans laquelle les saillies arrières (13, 14) comprennent au moins une saillie arrière supérieure (13) et au moins une saillie arrière inférieure (14), disposées parallèlement l'une à l'autre ;
dans laquelle les saillies arrières (13, 14) comprennent sur la partie allongée de la griffe une face supérieure et une face inférieure ;
dans laquelle la face supérieure de la saillie arrière supérieure comprend un renfoncement (15) destiné à recevoir une surface chanfreinée d'une languette de la pièce polymère d'un véhicule ;
dans laquelle la pièce polymère injectée comprend au moins une ouverture supérieure (2) et une ouverture inférieure configurées pour recevoir les saillies arrières en forme de griffe (13, 14) du dispositif de suspension ; dans laquelle l'ouverture supérieure (2) comprend une languette anti-démontage flexible (1), et dans laquelle la languette flexible (1) a un profil chanfreiné sur la face avant correspondant au renfoncement de la face supérieure (15) de la saillie arrière supérieure (13).

2. Pièce polymère injectée selon la revendication 1, dans laquelle le dispositif de suspension polymère injecté incorporé comprend au moins 3 saillies arrières ou au moins 4 saillies arrières.

3. Pièce polymère injectée selon les revendications précédentes, dans laquelle le dispositif de suspension polymère injecté incorporé comprend une paire de saillies arrières supérieures et une paire de saillies arrières inférieures disposées parallèlement les unes aux autres.

4. Pièce polymère injectée selon les revendications 1-2, dans laquelle le dispositif de suspension polymère injecté incorporé comprend une paire de saillies arrières supérieures et une saillie arrière inférieure.

5. Pièce polymère injectée selon les revendications 1-2, dans laquelle le dispositif de suspension polymère injecté incorporé comprend une saillie arrière supérieure et une paire de saillies arrières inférieures.

6. Pièce polymère injectée selon l'une quelconque des revendications précédentes, dans laquelle chaque saillie arrière du dispositif de suspension polymère injecté incorporé comprend une face supérieure parallèle à la face inférieure.

7. Pièce polymère injectée selon l'une quelconque des revendications précédentes, dans laquelle chaque saillie arrière du dispositif de suspension polymère injecté incorporé comprend une face supérieure ou une face inférieure disposée horizontalement.

8. Pièce polymère injectée selon l'une quelconque des revendications 1-5, dans laquelle chaque saillie arrière du dispositif de suspension polymère injecté incorporé comprend une face supérieure avec une pente négative par rapport à la face inférieure.

9. Pièce polymère injectée selon l'une quelconque des revendications précédentes, dans laquelle les saillies arrières du dispositif de suspension polymère injecté incorporé apparaissent verticalement, par rapport au haut, vers le bas.

10. Pièce polymère injectée selon l'une quelconque des revendications précédentes, dans laquelle le matériau du dispositif de suspension polymère injecté incorporé est du plastique, préférablement choisi parmi la liste suivante : polypropylène, acrylonitrile, butadiène, styrène, ou des combinaisons de ceux-ci ; préférablement un mélange de polypropylène avec 5% (poids/poids) de talc ou d'acrylonitrile, butadiène, styrène.

11. Pièce polymère injectée selon l'une quelconque des revendications précédentes, dans laquelle le dispositif de suspension polymère injecté incorporé supporte un article pesant un maximum de 10kg, préférablement entre 3-8kg, plus préférablement 3-5kg.

12. Pièce polymère injectée selon l'une quelconque des revendications précédentes, dans laquelle le dispositif de suspension polymère injecté incorporé supporte un article pesant un maximum de 2,5kg.

13. Procédé d'assemblage du dispositif de suspension polymère injecté dans la pièce polymère injectée incorporée pour un véhicule décrit dans l'une quelconque des revendications 1-12, préférablement dans un montant de véhicule, comprenant les étapes consistant à :
aligner les saillies arrières du dispositif de suspension avec les ouvertures de la pièce polymère incorporée du véhicule ;
introduire la saillie arrière inférieure ;
appliquer une force telle que la saillie arrière supérieure soit emmanchée à l'ouverture de la pièce polymère incorporée du véhicule.
